# EUROPEAN PATENT APPLICATION

(11) **EP 4 664 018 A1**
(43) Date of publication of application: **17.12.2025**
(21) Application number: 25177956.7
(22) Date of filing: 21.05.2025
(51) Int. Cl.: F24C 15/18, F24C 15/32, A47J 27/04

(54) **DRAWER-TYPE STEAMER AND INTEGRATED KITCHEN DEVICE**

(30) Priority: 13.06.2024 CN 202421345480 U
(71) Applicant: BSH Hausgeräte GmbH, 81739 München (DE)
(72) Inventor: Wang, Yingkai, Nanjing 210046 (CN); Ni, Chungen, Nanjing 210046 (CN); Chi, Bin, Nanjing 210046 (CN); Wu, Rong, Nanjing 210046 (CN); Li, Tiantao, Nanjing 210046 (CN)

(57) **Abstract**

This application relates to a drawer-type steamer. The drawer-type steamer includes a steamer drawer configured to be selectively withdrawn rearward or pulled forward. The steamer drawer includes: a steaming cavity, configured to accommodate a to-be-steamed object, where a rear wall of the steaming cavity has a steam inlet, and a front wall of the steaming cavity has a steam outlet; a steam generator, arranged behind the steaming cavity, where steam generated by the steam generator is configured to move forward to enter the steaming cavity through the steam inlet and move forward to exit the steaming cavity through the steam outlet. This application further relates to an integrated kitchen device. An advantage of this application is that an efficient and convenient steamer can be provided.

## Description

### TECHNICAL FIELD

This application relates to a drawer-type steamer and an integrated kitchen device.

### BACKGROUND

Currently, electric steamers on the market generally have a very large volume, for which a customer has few choices on a mounting position in a kitchen space with a limited size, and it is inconvenient to use the electric steamers. In addition, the largevolume steamers generally have excessively low steam efficiency, in which a large amount of energy is consumed to heat a cavity, resulting in an excessively long heating time and a poor steaming effect.

### SUMMARY

An objective of embodiments of this application is to provide a drawer-type steamer and an integrated kitchen device.

According to a first aspect of this application, an embodiment of this application provides a drawer-type steamer. The drawer-type steamer includes a steamer drawer configured to be selectively withdrawn rearward or pulled forward. The steamer drawer includes:
a steaming cavity, configured to accommodate a to-be-steamed object, where a rear wall of the steaming cavity has a steam inlet, and a front wall of the steaming cavity has a steam outlet;
a steam generator, arranged behind the steaming cavity, where
steam generated by the steam generator is configured to move forward to enter the steaming cavity through the steam inlet and move forward to exit the steaming cavity through the steam outlet.

According to an optional embodiment of this application, the steamer drawer includes a detachable steaming box, and the steaming box forms the steaming cavity; and/or the steam inlet is offset to the left or the right on the rear wall, and the steam outlet is oppositely offset to the right or the left on the front wall relative to the steam inlet; and/or
the steam inlet is in a shape of a slit; and/or
the steam outlet is in a shape of a round hole; and/or
the steamer drawer includes a water box located in front of the steaming cavity; and/or
the steamer drawer includes a user interface assembly located in front of the steaming cavity; and/or
the steamer drawer includes a door assembly configured to selectively open or close an upward opening of the steaming cavity; and/or
the steamer drawer includes a vent duct, and the vent duct is configured to decompress the steam exiting the steaming cavity; and/or
the steamer drawer includes a front panel, and the front panel is provided with an exhaust port configured to exhaust the steam exiting the steaming cavity out of the steamer drawer; and/or
the steamer drawer includes a pumping mechanism configured to supply water to the steam generator.

According to an optional embodiment of this application, the steaming box has an adapter, the steam generator has a socket, and the adapter is configured to be inserted downward into the socket to bring the steam generator and the steaming cavity into communication; and/or
the water box and the user interface assembly are side by side in a left-right direction; and/or
the vent duct is formed by an interlayer located behind the front panel, and an outlet of the vent duct forms the exhaust port; and/or
the steaming cavity is connected to the vent duct through a connecting tube, and the connecting tube is located below the user interface assembly; and/or
the pumping mechanism includes a water pump assembly and a valve, the water box is connected to the valve through a hose, the valve is connected to the water pump assembly through a hose, and the water pump assembly is connected to the steam generator through a hose; and/or
the pumping mechanism and the steam generator are side by side in the left-right direction; and/or
the steamer drawer includes a main body configured to hold the steaming box; and/or the steamer drawer includes a cooling fan, and the cooling fan is configured to deliver cool air into the vent duct to cool the steam therein.

According to an optional embodiment of this application, the door assembly is mounted to the main body in a manner allowing the door assembly to pivot and/or translate; and/or
the main body includes a bottom frame and a frame-shaped support arranged on the bottom frame; and/or
the water pump assembly includes a first water pump configured to pump water in the water box to the steam generator and a second water pump configured to pump water in the steam generator to the water box.

According to an optional embodiment of this application, a side edge of the frame-shaped support is hollow and open downward, and is configured to accommodate the hose connecting the water box to the valve.

According to an optional embodiment of this application, two hinge supports are vertically arranged on the bottom frame on the left and the right, tops of the two hinge supports respectively bear a hinge sheet configured to be hinged to the door assembly, and in the left-right direction, the water pump assembly, the valve, and the steam generator are located between the two hinge supports.

According to an optional embodiment of this application, the steamer drawer includes a guide rail configured to implement withdrawal and pull of the steamer drawer.

According to an optional embodiment of this application, the drawer-type steamer includes a housing, and the steamer drawer is configured to be withdrawn into the housing and pulled out of the housing.

According to a second aspect of this application, an embodiment of this application provides an integrated kitchen device. The integrated kitchen device indudes a base body and the foregoing drawer-type steamer. The base body has an accommodating portion, and the drawer-type steamer is configured to be integrated into the accommodating portion.

According to an optional embodiment of this application, the base body is in a shape of a box or a cabinet; and/or the base body is constructed in a form of a toaster, an integrated stove, a kitchen cabinet, or a microwave oven; and/or
the drawer-type steamer is configured to be detachably mounted into the accommodating portion of the base body.

### BRIEF DESCRIPTION OF THE DRAWINGS

Principles, features, and advantages of this application can be better understood through description of this application in more detail below with reference to drawings. The drawings include the following:
- FIG. 1: is a three-dimensional view illustrating an example of a steamer drawer of a drawer-type steamer according to this application.
- FIG. 2: is a three-dimensional view illustrating the steamer drawer in FIG. 1 from a rear viewing angle.
- FIG. 3: is an exploded view illustrating the steamer drawer in FIG. 1.
- FIG. 4: is a three-dimensional view showing an example of the drawer-type steamer according to this application.
- FIG. 5: shows the drawer-type steamer in FIG. 4 from a bottom viewing angle.
- FIG. 6: is an enlarged view showing a part of FIG. 5.
- FIG. 7: shows the drawer-type steamer in FIG. 4, with a door assembly being closed.
- FIG. 8: is a cross-sectional view showing a part of the steamer drawer.
- FIG. 9: is another cross-sectional view showing a part of the steamer drawer.
- FIG. 10: shows the steamer drawer in FIG. 1 from a bottom viewing angle, with a bottom frame being removed.
- FIG. 11: is a principle diagram illustrating an example of a steam export route of the steamer drawer.
- FIG. 12: is a three-dimensional view illustrating an example of an integrated kitchen device according to this application.

### DETAILED DESCRIPTION

In order to make technical problems to be resolved in this application, technical solutions, and beneficial technical effects clearer, v is further described in detail below with reference to drawings and a plurality of exemplary embodiments. It should be understood that the specific embodiments described herein are merely used to explain this application and are not used to limit the protection scope of this application.

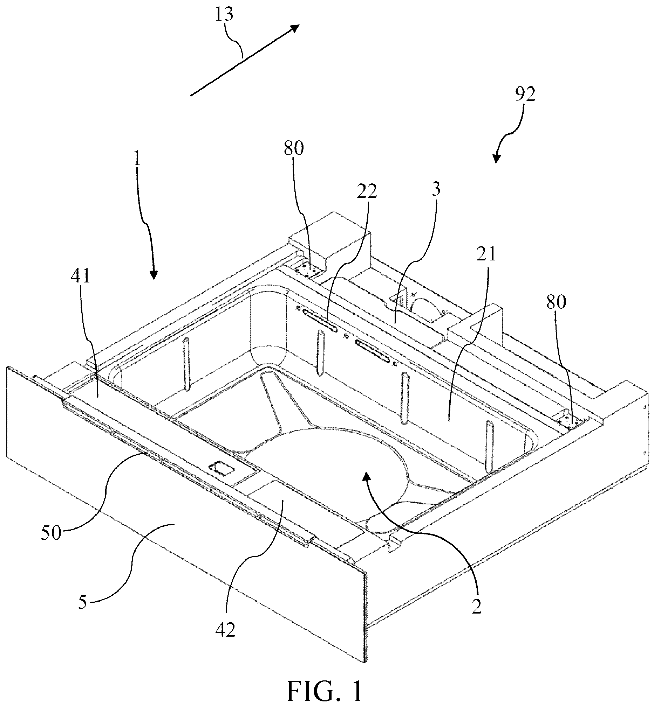

FIG. 1 is a three-dimensional view illustrating an example of a steamer drawer 1 of a drawer-type steamer 92 according to this application. The drawer-type steamer 92 may be a cooking device that can be used alone, or may be a part of an integrated kitchen device 9. The steamer drawer 1 may be selectively withdrawn rearward or pulled forward. In FIG. 1, a rearward direction 13 is marked by an arrow.

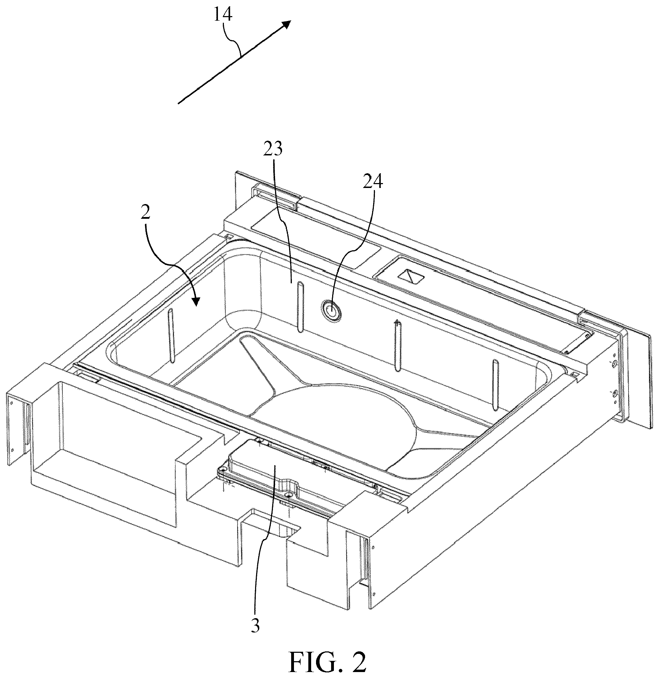

FIG. 2 is a three-dimensional view illustrating the steamer drawer 1 in FIG. 1 from a rear viewing angle. Herein, a forward direction 14 is marked by an arrow.

As shown in FIG. 1 and FIG. 2, the steamer drawer 1 indudes:
a steaming cavity 2, configured to accommodate a to-be-steamed object, where a rear wall 21 of the steaming cavity 2 has a steam inlet 22, and a front wall 23 of the steaming cavity 2 has a steam outlet 24;
a steam generator 3, arranged behind the steaming cavity 2, where
steam generated by the steam generator 3 is configured to move forward to enter the steaming cavity 2 through the steam inlet 22 and move forward to exit the steaming cavity 2 through the steam outlet 24.

In this way, steam can be well distributed into the steaming cavity 2, and can be conveniently exported forward out of the steamer drawer 1.

According to an exemplary embodiment of this application, as shown in FIG. 1 and FIG. 2, the steam inlet 22 is offset to the left or the right on the rear wall 21, and the steam outlet 24 is oppositely offset to the right or the left on the front wall 23 relative to the steam inlet 22, which facilitates even distribution of steam in the steaming cavity 2.

According to an exemplary embodiment of this application, as shown in FIG. 1, the steam inlet 22 is in a shape of a slit, to lengthen the steam inlet 22 as much as possible.

According to an exemplary embodiment of this application, as shown in FIG. 1, the steamer drawer 1 includes a water box 41 located in front of the steaming cavity 2, which enables convenient addition of water.

According to an exemplary embodiment of this application, as shown in FIG. 1, the steamer drawer 1 includes a user interface assembly 42 located in front of the steaming cavity 2, which facilitates interaction with a user.

According to an exemplary embodiment of this application, as shown in FIG. 1, the water box 41 and the user interface assembly 42 are side by side in a left-right direction, which facilitates designing of the steaming cavity 2.

According to an exemplary embodiment of this application, as shown in FIG. 1, the steamer drawer 1 includes a front panel 5, and the front panel 5 is provided with an exhaust port 50 configured to exhaust the steam exiting the steaming cavity 2 out of the steamer drawer 1. In this way, the steam can be legally exported from a front side of the steamer drawer 1.

According to an exemplary embodiment of this application, as shown in FIG. 2, the steam outlet 24 is in a shape of a round hole, which facilitates reduction of a space occupied by the steam outlet 24.

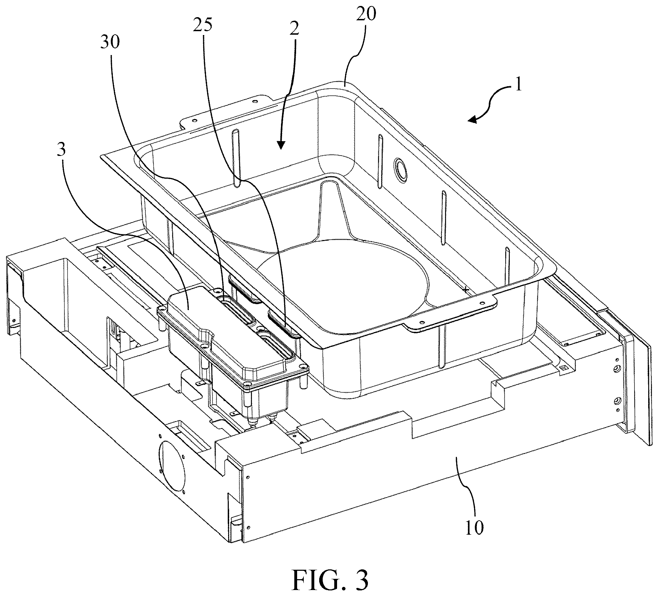

FIG. 3 is an exploded view illustrating the steamer drawer 1 in FIG. 1.

According to an exemplary embodiment of this application, as shown in FIG. 3, the steamer drawer 1 includes a detachable steaming box 20, and the steaming box 20 forms the steaming cavity 2. In this way, it is convenient to clean the steamer drawer 1 and replace the steaming box 20 with a new one when the steaming box 20 is damaged.

According to an exemplary embodiment of this application, as shown in FIG. 3, the steaming box 20 has an adapter 25, the steam generator 3 has a socket 30, and the adapter 25 is configured to be inserted downward into the socket 30 to bring the steam generator 3 and the steaming cavity 2 into communication, which facilitates mounting and removal of the steaming box 20.

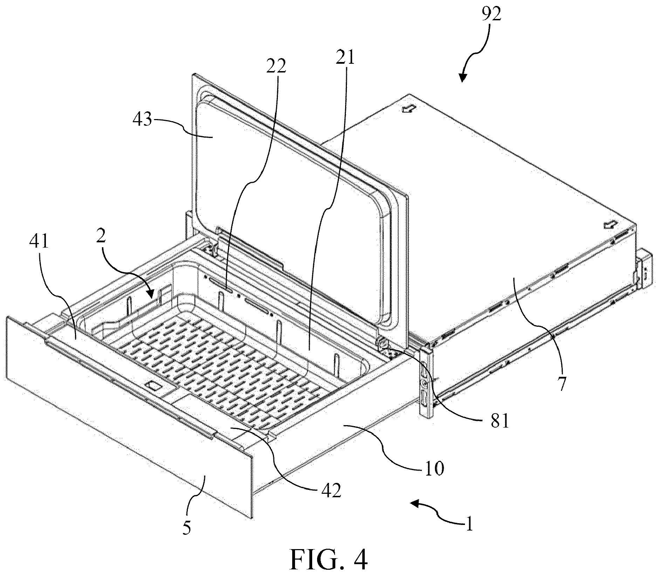

According to an exemplary embodiment of this application, as shown in FIG. 3, the steamer drawer 1 includes a main body 10 configured to hold the steaming box 20. FIG. 4 is a three-dimensional view showing an example of the drawer-type steamer 92 according to this application.

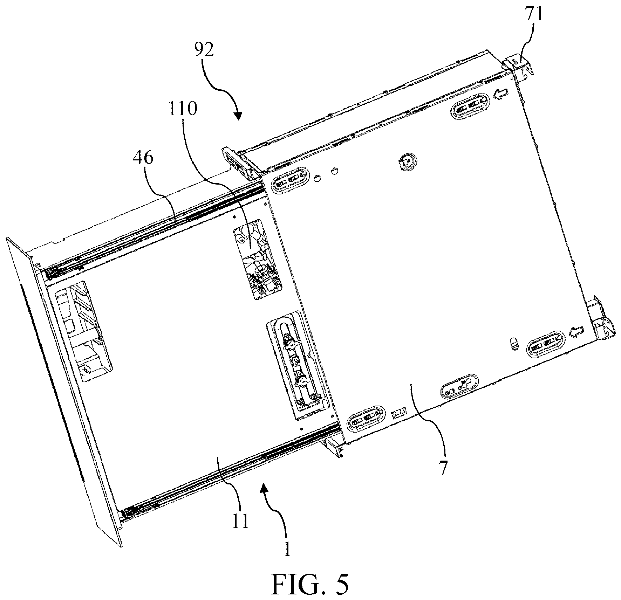

FIG. 5 shows the drawer-type steamer 92 in FIG. 4 from a bottom viewing angle.

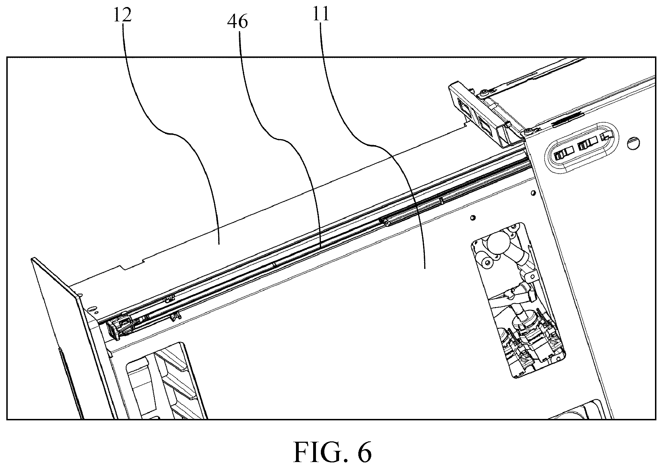

FIG. 6 is an enlarged view showing a part of FIG. 5.

According to an exemplary embodiment of this application, as shown in FIG. 4, the drawer-type steamer 92 includes a housing 7, and the steamer drawer 1 is configured to be withdrawn into the housing 7 and pulled out of the housing 7.

According to an exemplary embodiment of this application, as shown in FIG. 5, a fixing structure 71 is arranged on a rear portion of the housing 7. The housing 7 may be fixed to a kitchen cabinet through the fixing structure 71 by using a screw that is not shown.

According to an exemplary embodiment of this application, as shown in FIG. 6, the steamer drawer 1 includes a guide rail 46 configured to implement withdrawal and pull of the steamer drawer 1.

According to an exemplary embodiment of this application, as shown in FIG. 4, the steamer drawer 1 includes a door assembly 43 configured to selectively open or close an upward opening of the steaming cavity 2. The steaming cavity 2 can be sealed more effectively through the door assembly 43.

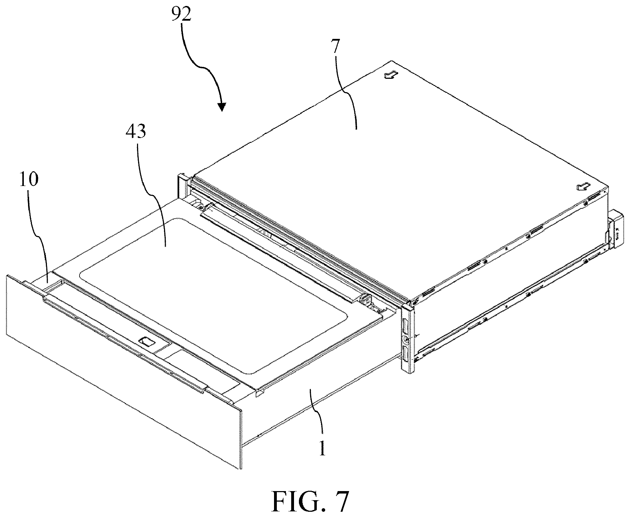

FIG. 7 shows the drawer-type steamer 92 in FIG. 4, with the door assembly 43 being closed.

According to an exemplary embodiment of this application, the door assembly 43 is mounted to the main body 10 in a manner allowing the door assembly to pivot and/or translate. In FIG. 4, the door assembly 43 may be pivoted relative to the main body 10.

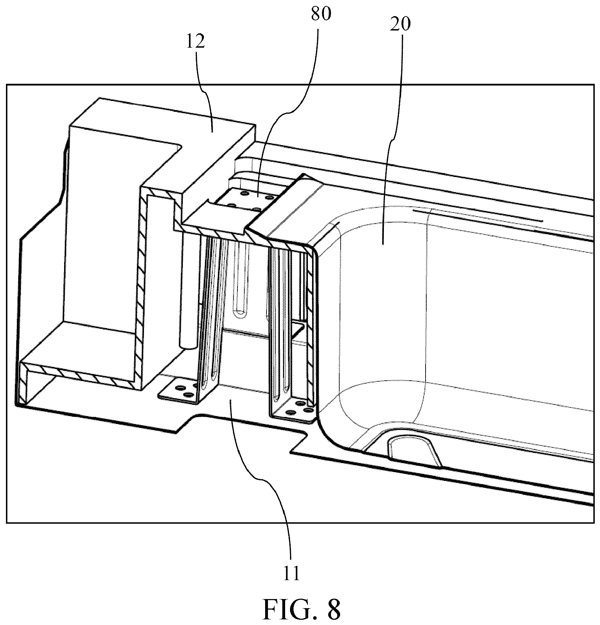

FIG. 8 is a cross-sectional view showing a part of the steamer drawer 1.

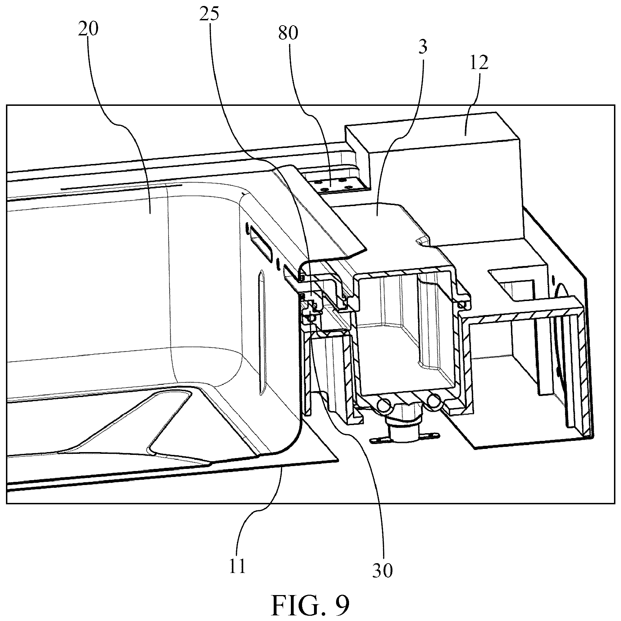

FIG. 9 is another cross-sectional view showing a part of the steamer drawer 1.

According to an exemplary embodiment of this application, as shown in FIG. 6, FIG. 8, and FIG. 9, the main body 10 includes a bottom frame 11 and a frame-shaped support 12 arranged on the bottom frame 11. The bottom frame 11 mainly forms a bottom of the main body 10, and the frame-shaped support 12 mainly forms four side walls of the main body 10, which facilitates assembly of the steamer drawer 1.

To implement pivoting of the door assembly 43, as shown in FIG. 8 and FIG. 9, two hinge supports 80 are particularly vertically arranged on the bottom frame 11 on the left and the right. Referring to FIG. 4, tops of the two hinge supports 80 may respectively bear a hinge sheet 81 configured to be hinged to the door assembly 43. The hinge sheet 81 is particularly L-shaped, so as to be fixed to the hinge support 80 with a horizontal segment and hinged to the door assembly 43 with a vertical segment.

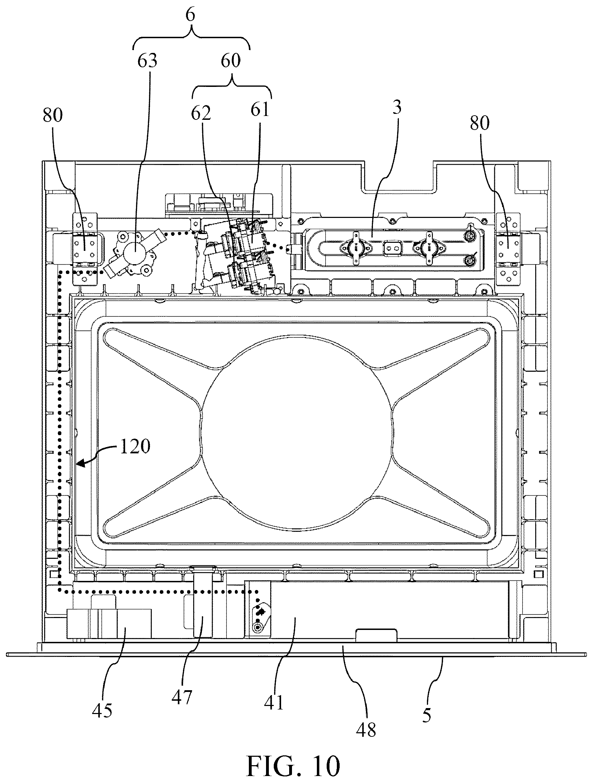

FIG. 10 shows the steamer drawer 1 in FIG. 1 from a bottom viewing angle, with the bottom frame 11 being removed. According to an exemplary embodiment of this application, as shown in FIG. 10, the steamer drawer 1 includes a pumping mechanism 6 configured to supply water to the steam generator 3.

According to an exemplary embodiment of this application, as shown in FIG. 10, the pumping mechanism 6 indudes a water pump assembly 60 and a valve 63, the water box 41 is connected to the valve 63 through a hose, the valve 63 is connected to the water pump assembly 60 through a hose, and the water pump assembly 60 is connected to the steam generator 3 through a hose. Herein, for brevity, a corresponding hose is illustrated by dotted line.

In addition, as shown in FIG. 5, a bottom frame window 110 is provided on the bottom frame 11. Through the bottom frame window 110, the components inside the steamer drawer 1 can be observed, and can be touched when necessary. The components may include a pumping mechanism 6, the steam generator 3, and/or other components.

According to an exemplary embodiment of this application, as shown in FIG. 10, in the left-right direction, the water pump assembly 60, the valve 63, and the steam generator 3 are located between the two hinge supports 80.

According to an exemplary embodiment of this application, as shown in FIG. 10, the pumping mechanism 6 and the steam generator 3 are side by side in the left-right direction.

According to an exemplary embodiment of this application, as shown in FIG. 10, the water pump assembly 60 includes a first water pump 61 configured to pump water in the water box 41 to the steam generator 3 and a second water pump 62 configured to pump water in the steam generator 3 to the water box 41. During steaming, the valve 63 is turned on, and the first water pump 61 starts operating to supply water to the steam generator 3. When the steaming ends, water in the steam generator 3 is pumped by the second water pump 62 to the water box 41 through the valve 63 that is turned on, to prevent incrustation or malodorous residual water in the steam generator 3.

According to an exemplary embodiment of this application, as shown in FIG. 10, a side edge 120 (a left side and/or a right side) of the frame-shaped support 12 is hollow and open downward, and is configured to accommodate the hose connecting the water box 41 to the valve 63.

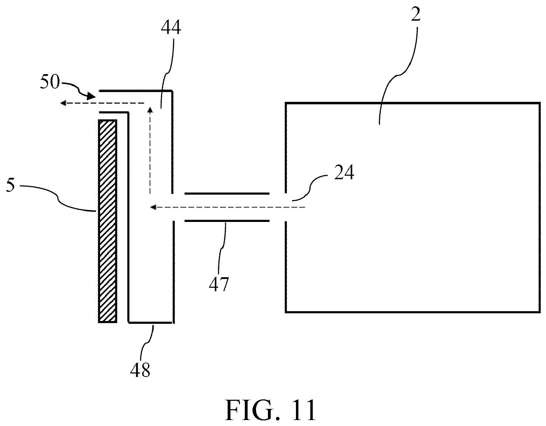

FIG. 11 is a principle diagram illustrating an example of a steam export route of the steamer drawer 1.

According to an exemplary embodiment of this application, as shown in FIG. 11, the steamer drawer 1 includes a vent duct 44, and the vent duct 44 is configured to decompress the steam exiting the steaming cavity 2. In this way, the steam can be prevented from spraying out from the steamer drawer 1.

According to an exemplary embodiment of this application, as shown in FIG. 11, the vent duct 44 is formed by an interlayer 48 located behind the front panel 5, and an outlet of the vent duct 44 forms the exhaust port 50.

According to an exemplary embodiment of this application, referring to FIG. 10 and FIG. 11, the steaming cavity 2 is connected to the vent duct 44 through a connecting tube 47, and the connecting tube 47 is located below the user interface assembly 42.

According to an exemplary embodiment of this application, as shown in FIG. 10, the steamer drawer 1 includes a cooling fan 45, and the cooling fan 45 is configured to deliver cool air into the vent duct 44 to cool the steam therein. The steam is cooled before being exhausted out of the steamer drawer 1, to ensure safety of the user.

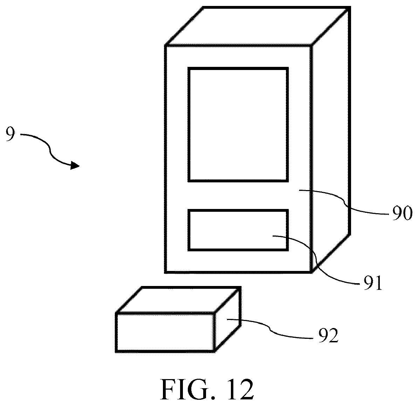

FIG. 12 is a three-dimensional view illustrating an example of an integrated kitchen device 9 according to this application. The integrated kitchen device 9 includes a base body 90 and a drawer-type steamer 92, the base body 90 has an accommodating portion 91, and the drawer-type steamer 92 is configured to be integrated into the accommodating portion 91.

According to an exemplary embodiment of this application, referring to FIG. 12, the base body 90 is in a shape of a box or a cabinet. The base body 90 is particularly constructed in a form of a toaster, an integrated stove, a kitchen cabinet, or a microwave oven. Herein, the drawer-type steamer 92 may be constructed to be detachably mounted into the accommodating portion 91 of the base body 90.

In some of the drawings, to clearly show some components, other components that block the components are already removed. Quantities, dimensions, locations, and mutual relationships of elements in the drawings should be understood as examples, which do not constitute absolute limitations on this application. In this application, even though not explicitly stated, where theoretically possible, each described feature should be considered as being independent and may be combined with any other feature in any manner, and is not limited to the combinations described in this application. Words representing orientations, such as "front", "rear", "left", and "right", are especially for a pose, and a person skilled in the art can understand that meanings of the words correspondingly change when the pose changes.

Although the specific implementations are described above, the implementations are not intended to limit the scope disclosed in this application, even if only a single implementation is described with respect to a specific feature. The feature examples provided in the disclosure of this application are intended for illustration but not limitation, unless otherwise stated. During specific implementation, a plurality of features may be combined with each other based on an actual need where technically feasible. In the spirit and scope of this application, various replacements, changes, and modifications may be conceived.

### REFERENCE NUMERALS:

1 Steamer drawer
10 Main body
11 Bottom frame
110 Bottom frame window
12 Frame-shaped support
120 Side edge
13 Rearward direction
14 Forward direction
2 Steaming cavity
20 Steaming box
21 Rear wall
22 Steam inlet
23 Front wall
24 Steam outlet
25 Adapter
3 Steam generator
30 Socket
41 Water box
42 User interface assembly
43 Door assembly
44 Vent duct
45 Cooling fan
46 Guide rail
47 Connecting tube
48 Interlayer
5 Front panel,
50 Exhaust port
6 Pumping mechanism,
60 Water pump assembly
61 First water pump
62 Second water pump
63 Valve
7 Housing
71 Fixing structure
80 Hinge support
81 Hinge sheet
9 Integrated kitchen device
90 Base body
91 Accommodating portion
92 Drawer-type steamer

## Claims

1. A drawer-type steamer (92), **characterized by** comprising a steamer drawer (1) configured to be selectively withdrawn rearward or pulled forward, wherein the steamer drawer (1) comprises:
a steaming cavity (2), configured to accommodate a to-be-steamed object, wherein a rear wall (21) of the steaming cavity (2) has a steam inlet (22), and a front wall (23) of the steaming cavity (2) has a steam outlet (24);
a steam generator (3), arranged behind the steaming cavity (2), wherein
steam generated by the steam generator (3) is configured to move forward to enter the steaming cavity (2) through the steam inlet (22) and move forward to exit the steaming cavity (2) through the steam outlet (24).

2. The drawer-type steamer (92) according to claim 1, **characterized in that** the steamer drawer (1) comprises a detachable steaming box (20), and the steaming box (20) forms the steaming cavity (2); and/or the steam inlet (22) is offset to the left or the right on the rear wall (21), and the steam outlet (24) is oppositely offset to the right or the left on the front wall (23) relative to the steam inlet (22); and/or
the steam inlet (22) is in a shape of a slit; and/or
the steam outlet (24) is in a shape of a round hole; and/or the steamer drawer (1) comprises a water box (41) located in front of the steaming cavity (2); and/or
the steamer drawer (1) comprises a user interface assembly (42) located in front of the steaming cavity (2); and/or
the steamer drawer (1) comprises a door assembly (43) configured to selectively open or close an upward opening of the steaming cavity (2); and/or
the steamer drawer (1) comprises a vent duct (44), and the vent duct (44) is configured to decompress the steam exiting the steaming cavity (2); and/or
the steamer drawer (1) comprises a front panel (5), and the front panel (5) is provided with an exhaust port (50) configured to exhaust the steam exiting the steaming cavity (2) out of the steamer drawer (1); and/or
the steamer drawer (1) comprises a pumping mechanism (6) configured to supply water to the steam generator (3).

3. The drawer-type steamer (92) according to claim 2, **characterized in that** the steaming box (20) has an adapter (25), the steam generator (3) has a socket (30), and the adapter (25) is configured to be inserted downward into the socket (30) to bring the steam generator (3) and the steaming cavity (2) into communication; and/or
the water box (41) and the user interface assembly (42) are side by side in a left-right direction; and/or
the vent duct (44) is formed by an interlayer (48) located behind the front panel (5), and an outlet of the vent duct (44) forms the exhaust port (50); and/or the steaming cavity (2) is connected to the vent duct (44) through a connecting tube (47), and the connecting tube (47) is located below the user interface assembly (42); and/or
the pumping mechanism (6) comprises a water pump assembly (60) and a valve (63), the water box (41) is connected to the valve (63) through a hose, the valve (63) is connected to the water pump assembly (60) through a hose, and the water pump assembly (60) is connected to the steam generator (3) through a hose; and/or
the pumping mechanism (6) and the steam generator (3) are side by side in the left-right direction; and/or
the steamer drawer (1) comprises a main body (10) configured to hold the steaming box (20); and/or
the steamer drawer (1) comprises a cooling fan (45), and the cooling fan (45) is configured to deliver cool air into the vent duct (44) to cool the steam therein.

4. The drawer-type steamer (92) according to claim 3, **characterized in that**
the door assembly (43) is mounted to the main body (10) in a manner allowing the door assembly to pivot and/or translate; and/or
the main body (10) comprises a bottom frame (11) and a frame-shaped support (12) arranged on the bottom frame (11); and/or
the water pump assembly (60) comprises a first water pump (61) configured to pump water in the water box (41) to the steam generator (3) and a second water pump (62) configured to pump water in the steam generator (3) to the water box (41).

5. The drawer-type steamer (92) according to claim 4, **characterized in that** a side edge (120) of the frame-shaped support (12) is hollow and open downward, and is configured to accommodate the hose connecting the water box (41) to the valve (63).

6. The drawer-type steamer (92) according to claim 4, **characterized in that** two hinge supports (80) are vertically arranged on the bottom frame (11) on the left and the right, tops of the two hinge supports (80) respectively bear a hinge sheet (81) configured to be hinged to the door assembly (43), and in the left-right direction, the water pump assembly (60), the valve (63), and the steam generator (3) are located between the two hinge supports (80).

7. The drawer-type steamer (92) according to any of claims 1 to 6, **characterized in that** the steamer drawer (1) comprises a guide rail (46) configured to implement withdrawal and pull of the steamer drawer (1).

8. The drawer-type steamer (92) according to any of claims 1 to 6, **characterized by** comprising a housing (7), wherein the steamer drawer (1) is configured to be withdrawn into the housing (7) and pulled out of the housing (7).

9. An integrated kitchen device (9), **characterized by** comprising a base body (90) and the drawer-type steamer according to any of claims 1 to 8, wherein the base body (90) has an accommodating portion (91), and the drawer-type steamer (92) is configured to be integrated into the accommodating portion (91).

10. The integrated kitchen device (9) according to claim 9, **characterized in that**
the base body (90) is in a shape of a box or a cabinet; and/or
the base body (90) is constructed in a form of a toaster, an integrated stove, a kitchen cabinet, or a microwave oven; and/or
the drawer-type steamer (92) is configured to be detachably mounted into the accommodating portion (91) of the base body (90).
